# EUROPÄISCHE PATENTSCHRIFT

(11) **EP 3 931 260 B1**
(45) Veröffentlichungstag und Bekanntmachung des Hinweises auf die Patenterteilung: **05.04.2023**
(21) Anmeldenummer: 20705736.5
(22) Anmeldetag: 24.02.2020
(51) Int. Cl.: C08L 77/02

(54) **POLYAMID-FORMMASSEN MIT ERHÖHTER HYDROLYSEBESTÄNDIGKEIT**
POLYAMIDE MOLDING COMPOUNDS HAVING INCREASED HYDROLYSIS RESISTANCE
MATIÈRE À MOULER EN POLYAMIDE PRÉSENTANT UNE RÉSISTANCE ACCRUE À L'HYDROLYSE

(30) Priorität: 25.02.2019 EP 19159212
(43) Veröffentlichungstag der Anmeldung: 05.01.2022
(73) Patentinhaber: BASF SE, 67056 Ludwigshafen am Rhein (DE)
(72) Erfinder: CREMER, Jens, 67056 Ludwigshafen (DE); XALTER, Rainer, 67056 Ludwigshafen (DE)
(74) Vertreter: BASF IP Association
(86) Internationale Anmeldenummer: PCT/EP2020/054754
(87) Internationale Veröffentlichungsnummer: WO 2020/173866

(56) Entgegenhaltungen:
- EP-B1- 2 057 223
- CN-A- 102 732 000
- CN-A- 102 732 001
- CN-A- 107 057 337
- US-A1- 2015 065 641

## Beschreibung

Die Erfindung betrifft Polyamid-Formmassen mit verbesserter Hydrolysebeständigkeit gegenüber Wasser oder wässrigen Flüssigkeiten, wie Kühlmittelmischungen. Die Formmassen sollen geeignet sein zur Herstellung von insbesondere Bauteilen im Automobilbereich.

Polyamide gehören zu den weltweit in großem Umfang hergestellten Polymeren und dienen neben den Hauptanwendungsbereichen Folien, Fasern und Formkörpern (Werkstoffen) einer Vielzahl weiterer Verwendungszwecke. Unter den Polyamiden sind das Polyamid-6 (Polycaprolactam) und das Polyamid-66 (Nylon, Polyhexamethylenadipinsäureamid) die am meisten hergestellten Polymere. Die meisten technisch bedeutsamen Polyamide sind teilkristalline oder amorphe thermoplastische Polymere, die sich durch eine hohe Temperaturbeständigkeit auszeichnen. Die Hydrolysebeständigkeit lässt sich durch Abmischungen verbessern

EP 2 562 219 A1 betrifft thermoplastische Formmassen mit erhöhter Hydrolysebeständigkeit, die neben Polyamiden Copolymerisate aus mindestens einem Olefin und mindestens einem Acrylsäureester eines aliphatischen Alkohols sowie Füll- und Verstärkungsstoffe und oligomeres oder polymeres Carbodiimid enthalten. Als besonders bevorzugt sind Polyamid-6 und Polyamid-66 genannt.

EP 2 057 223 B1 betrifft Polyamidformmassen mit verbesserter Wärmealterungs- und Hydrolysebeständigkeit. Die Formmassen enthalten mindestens ein Polyamid mit einer Zahl an Aminoendgruppen von mindestens 50 mmol/kg, Glasfasern und einen Wärmestabilisator. Das Polyamid hat vorzugsweise eine Viskositätszahl von 100 bis 250 ml/g. Vorzugsweise ist das Polyamid ausgewählt aus Polyamid-66 und Mischungen von Polyamiden mit einem Polyamid-66-Anteil von wenigstens 80 Gew.-% oder entsprechenden Copolyamiden.

EP 2 831 159 B1 betrifft thermoplastische Formmassen mit erhöhter Hydrolysebeständigkeit, die neben Polyamiden mit einer Zahl an Aminoendgruppen von mindestens 50 mmol/kg Füll- und Verstärkungsstoffe, Kupferiodid/Kaliumbromid-Gemische und Montanwachs enthalten.

EP 0 129 974 A2 betrifft Polyamid-Artikel, die gegenüber Frostschutzmitteln beständig sind. Die verstärkten Zusammensetzungen enthalten Polyamid-66, Polyamid-6 oder Polyamid-6.10 und ein Copolymer auf Basis ethylenisch ungesättigter Monomere mit funktionellen Gruppen.

JP 2004/003056 betrifft ein Polyamid-66-Harz mit einem Polyamid-6.10-Harz zur Herstellung hochverstreckbarer Polyamidfasern. Das Harz kann zusätzlich Polyamid-6 enthalten.

JP 2002339164 betrifft hochverstreckbare Polyamidfasern, die ein Gemisch aus Polyamid-6.10 und Polyamid-6 enthalten.

JPS57212252 betrifft Mischungen aus Polyamid-6 mit 5 bis 35 Gew.-% Polyamid-6.10, die eine verbesserte Beständigkeit gegenüber Calciumchlorid aufweisen sollen.

CN 107 057 337 A betrifft Glasfaser-verstärkte hochfeste Polyamidmaterialien. Dabei ist das Polyamid ausgewählt aus PA6, PA66 und PA610, wobei PA66 bevorzugt ist. Beispielhafte Zusammensetzungen enthalten 30 Gew.-% PA66, 37 Gew.-% PA610 und offenbar 31,7 Gew.-% Glasfasern. Eine weitere Zusammensetzung enthält 36 Gew.-% PA6, 28 Gew.-% PA66 und offenbar 34,3 Gew.-% Glasfasern. Eine weitere Zusammensetzung enthält 40 Gew.-% PA6, 25 Gew.-% PA610 und offenbar 33,5 Gew.-% Glasfasern.

US 2015/065641 A1 betrifft Rohrverbinder auf Basis einer Polyamid-Zusammensetzung. Die in den Beispielen aufgeführten Zusammensetzungen weisen überwiegend höhere Anteile an PA6.10, PA6.12 oder PA10.10 gegenüber PA6 auf.

Sowohl CN 102 732 000 A als auch CN 102 732 001 A betreffen Polyamid-Zusammensetzungen, die PA6, PA610 bzw. PA1010, Flammschutzmasterbatch, Glasfasern, einen Oxidationsinhibitor und ein Schmiermittel enthalten. Der Flammschutzmasterbatch umfasst roten Phosphor, ein Antimigrationsagens und ein Hilfsmittel für hohe Kriechstromfestigkeit.

Aufgabe der vorliegenden Erfindung ist die Bereitstellung von thermoplastischen Formmassen, die insbesondere geeignet sind zur Herstellung von Bauteilen im Automobil-Bereich mit verbesserter Hydrolysebeständigkeit gegenüber Wasser oder wässrigen Flüssigkeiten, wie Kühlmittelmischungen.

Die Aufgabe wird erfindungsgemäß gelöst durch eine thermoplastische Formmasse enthaltend
a) eine Mischung aus 100 Gewichtsteilen Polyamid-6 oder Polyamid-6/6.6 und 7 bis 50 Gewichtsteilen aliphatischem Polyamid aus C₄₋₁₀-Diamin und C₈₋₁₆-Dicarbonsäure als Komponente A),
b) 10 bis 70 Gew.-%, bezogen auf Komponente A), an Glasfasern als Komponente B),
c) 0 bis 30 Gew.-%, bezogen auf Komponente A), weiterer Zusatzstoffe als Komponente C), vorzugsweise mit einer Abnahme der Bruchspannung gemäß ISO 527 nach Lagerung für 3000 h bei 120 °C in Monoethylenglykol/Wasser-Gemisch im Gewichtsverhältnis 1:1 um maximal 78 %, besonders bevorzugt maximal 75%, insbesondere maximal 70%, wobei die Formmasse keine von Polyamiden der Komponente A) unterschiedlichen thermoplastischen Polyamide und keine Flammschutzadditive enthält.

Die Aufgabe wird zudem gelöst durch ein Verfahren zur Herstellung derartiger Formmassen, bei dem man die Komponenten A) und B) und gegebenenfalls C) miteinander vermischt.

Die Aufgabe wird zudem gelöst durch Verwendung der Formmassen zur Herstellung von Fasern, Folien oder Formkörpern sowie durch entsprechende Fasern, Folien oder Formkörper, bevorzugt Formkörper.

Die Aufgabe wird zudem gelöst durch Verwendung von Mischungen aus 100 Gewichtsteilen Polyamid-6 oder Polyamid-6/6.6 und 5 bis 100 Gewichtsteilen aliphatischem Polyamid aus C₄₋₁₀-Diamin und C₈₋₁₆-Dicarbonsäure in Formmassen zur Herstellung von Formkörpern zur Erhöhung der Hydrolysebeständigkeit der Formkörper gegenüber Wasser oder wässrigen Flüssigkeiten, wie Monoethylenglykol/Wasser-Mischungen, z. B. Kühlmittelmischungen.

Die Aufgabe wird zudem gelöst durch die Verwendung von Mischungen aus 100 Gewichtsteilen Polyamid-6 oder Polyamid-6/6.6 und 5 bis 100 Gewichtsteilen aliphatischem Polyamid aus C₄₋₁₀-Diamin und C₈₋₁₆-Dicarbonsäure in Formmassen zur Erhöhung der Hydrolysebeständigkeit der Formmassen gegenüber Wasser oder wässrigen Flüssigkeiten, wie Monoethylenglykol/Wasser-Mischungen, z. B. Kühlmittelmischungen.

Die Aufgabe wird zudem gelöst durch die Verwendung von Mischungen aus 100 Gewichtsteilen Polyamid-6 oder Polyamid-6.6 und 5 bis 100 Gewichtsteilen aliphatischem Polyamid aus C₄₋₁₀-Diamin und C₈₋₁₆-Dicarbonsäure zur Erhöhung der Bruchspannung von diese enthaltenden Formkörpern, die in Kontakt mit Monoethylenglykol sind.

Kühlmittelmischungen werden insbesondere bei Verbrennungsmotoren als Kühlwasser-Additive eingesetzt. Hierbei handelt es sich beispielsweise um Monoethylenglykol oder Gemische, die Monoethylenglykol neben zusätzlichen Korrosionsschutzmitteln, wie Silikaten und/oder organischen Säuren, enthalten. In der Anwendung wird Monoethylenglykol mit Wasser vermischt, wobei das Mischungsverhältnis in Abhängigkeit von der gewünschten Zieltemperatur gewählt wird. Typischerweise wird für einen Kälteschutz von -40 °C ein Volumenverhältnis von Frostschutzmittel zu Wasser von 50:50 eingestellt. Für einen Kälteschutz von -10 °C reicht ein Anteil von 20 Volumenteilen Frostschutzmittel zu 80 Volumenteilen Wasser. Ein übliches Frostschutzmittel wird unter der Marke GLYSANTIN^{®} von BASF SE vertrieben.

Die thermoplastischen Formmassen enthalten als Komponente A) eine Mischung aus 100 Gewichtsteilen Polyamid-6 oder Polyamid-6/6.6 und 7 bis 50 Gewichtsteilen aliphatischem Polyamid aus C₄₋₁₀-Diamin und C₈₋₁₆-Dicarbonsäure.

Bei Polyamid-6 handelt es sich um ein Homopolymer auf Basis von Caprolactam oder Aminocapronitril.

Bei Polyamid-6/6.6 handelt es sich um ein Copolyamid mit beliebigen Anteilen an Monomeren des Polyamid-6 und Polyamid-6.6 oder eine Mischung beider Polyamide. Beide Komponenten können in gleichen Mol-Anteilen, im Überschuss oder Unterschuss, eingesetzt werden. Zudem können auch Mischungen von Polyamid-6 und Polyamid-6.6 eingesetzt werden. Besonders bevorzugt wird neben Polyamid-6 jedoch kein Copolyamid-6/6.6 oder Polyamid-6.6 eingesetzt oder der Anteil an Polyamid-6.6 oder entsprechenden Monomereinheiten im gesamten Polyamid-6/6.6 beträgt vorzugsweise maximal 50 Mol-%, besonders bevorzugt maximal 20 Mol-%, insbesondere maximal 10 Mol-%.

Insbesondere werden erfindungsgemäß Polyamid-6 und Copolymere oder Mischungen davon mit Polyamid-66 eingesetzt. Bevorzugt besitzt das Polyamid-6 eine Viskositätszahl von im Bereich von 80 bis 180 ml/g, insbesondere 85 bis 160 ml/g, insbesondere 90 bis 140 ml/g, bestimmt in einer 0,5 gew.-%igen Lösung in 96 gew.-%iger Schwefelsäure bei 25 °C gemäß ISO 307.

Ein für die Mischung geeignetes Polyamid-66 besitzt bevorzugt eine Viskositätszahl im Bereich von 110 bis 170 ml/g, besonders bevorzugt 130 bis 160 ml/g auf, bestimmt in einer 0,5 gew.-%igen Lösung in 96 gew.-%iger Schwefelsäure bei 25 °C gemäß ISO 307.

Das aliphatische Polyamid aus C₄₋₁₀-Diamin und C₈₋₁₆-Dicarbonsäure ist aus aliphatischen Diaminen und Dicarbonsäuren aufgebaut, die vorzugsweise endständig und linear sind. Besonders bevorzugt wird ein aliphatisches, endständiges, lineares C₅₋₈-Diamin, insbesondere Hexamethylendiamin, eingesetzt. Die Dicarbonsäure ist vorzugsweise eine aliphatische, lineare und endständige C₈₋₁₂-Dicarbonsäure, besonders bevorzugt C₉₋₁₁-Dicarbonsäure, speziell 1,10-Decandisäure. Bevorzugt sind Polyamid-6.10, Polyamid-6.12 und deren Gemische. Speziell bevorzugt ist Polyamid-6.10.

In der Komponente A) beträgt ihr Anteil 7 bis 50 Gewichtsteile, bevorzugt 10 bis 70 Gewichtsteile, bezogen auf das erste Polyamid.

Als Komponenten B) enthalten die thermoplastischen Formassen 10 bis 70 Gew.-%, vorzugsweise 20 bis 65 Gew.-%, besonders bevorzugt 25 bis 60 Gew.-%, speziell bevorzugt 40 bis 60 Gew.-%, bezogen auf Komponente A), an Glasfasern.

Speziell können Schnittglasfasern eingesetzt werden. Insbesondere umfasst die Komponente B) Glasfasern, wobei bevorzugt Kurzfasern eingesetzt werden. Diese weisen vorzugsweise eine Länge im Bereich von 2 bis 50 mm und einem Durchmesser von 5 bis 40 µm auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente B) sogenannte "flache Glasfasern". Diese weisen speziell eine ovale oder elliptische oder eine mit Einschnürung(en) versehene elliptische (sog. "Kokon"- oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäßen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d.h. sie machen mehr als 50 Gew.-% der Gesamtmasse der Fasern aus.

Wenn als Komponente B) Rovings von Glasfasern eingesetzt werden, weisen diese vorzugsweise einen Durchmesser von 10 bis 20 µm, bevorzugt von 12 bis 18 µm, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern, oder beliebige Mischungen davon oder Mischungen mit E-Glasfasern eingesetzt werden

Als Komponente C) können die erfindungsgemäßen Zusammensetzungen 0 bis 30 Gew.-%, vorzugsweise 0 bis 20 Gew.-%, insbesondere 0 bis 10 Gew.-%, bezogen auf Komponente A), weiterer Zusatzstoffe enthalten. Bei der Mitverwendung derartiger Zusatzstoffe beträgt die Mindestmenge 0,1 Gew.-%, vorzugsweise 0,15 Gew.-%, insbesondere 1 Gew.-%, bezogen auf Komponente A).

Die Gewichtsprozente beziehen sich auf Komponente A).

Als weitere Zusatzstoffe kommen von Komponente A) verschiedene thermoplastische Polymere, von Glasfasern der Komponente B) verschiedene Füll- und Verstärkungsstoffe oder weitere Additive in Betracht.

In den nachfolgend aufgeführten, als Komponente C) geeigneten Zusatzstoffen beziehen sich die jeweiligen Gewichtsprozente auf Komponente A). Bei Vorliegen mehrerer Zusatzstoffe gilt die eingangs genannte Obergrenze für die Summe der Mengen aller Zusatzstoffe.

Geeignete bevorzugte Additive C) sind Schmiermittel und Wärmestabilisatoren, aber auch Flammschutzmittel, Lichtschutzmittel (UV-Stabilisatoren, UV-Absorber oder UV-Blocker), Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer etc.

Als Komponente C) können die erfindungsgemäßen Formmassen vorzugsweise 0,1 bis 5 Gew.-%, besonders bevorzugt 0,2 bis 2,5 Gew.-%, insbesondere 0,5 bis 1,5 Gew.-% mindestens eines Wärmestabilisators, bezogen auf das Gesamtgewicht der Komponente A), enthalten.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5 Gew.-%, insbesondere 0,005 bis 0,3 Gew.-% und besonders bevorzugt 0,01 bis 0,2 Gew.-%, bezogen auf das Gesamtgewicht der Komponente A).

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt 0,2 bis 1,5 Gew.-%, bezogen auf das Gesamtgewicht der Komponente A).

Sofern Stabilisatoren auf Basis sterisch gehinderter Phenole verwendet wird, beträgt die Menge an diesen Stabilisatoren vorzugsweise 0,1 bis 1,5 Gew.-%, besonders bevorzugt 0,2 bis 1 Gew.-%, bezogen auf das Gesamtgewicht der Komponente A).

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf das Gesamtgewicht der Komponente A).

Geeignete Verbindungen C) des ein- oder zweiwertigen Kupfers sind z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O sowie die zweiwertigen Kupferverbindungen CuCl₂, CuSO₄, CuO, Kupfer(II)acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente C) zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, Kl, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard^{®} A), Addukte aus Phenylendiamin mit Linolensäure, 4,4'-Bis(α,α-dimethylbenzyl)diphenylamin (Nau-gard^{®} 445), N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4,4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphos-phit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox^{®} PAR24: Handelsprodukt der Firma BASF SE).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von Cul und Kl. Eine kommerziell erhältliche Stabilisatormischung, bestehend aus organischen Stabilisatoren und Epoxiden ist beispielsweise Irgatec^{®} NC66 von BASF SE. Insbesondere bevorzugt wird eine Wärmestabilisierung ausschließlich auf Basis von Cul und Kl. Neben dem Zusatz von Kupfer oder Kupferverbindungen ist die Verwendung weiterer Übergangsmetallverbindungen, insbesondere Metallsalze oder Metalloxide der Gruppe VB, VIB, VIIB oder VIIIB des Periodensystems, möglich oder alternativ auch ausgeschlossen. Darüber hinaus können der erfindungsgemäßen Formmasse bevorzugt keine Übergangsmetalle der Gruppe VB, VIB, VIIB oder VIIIB des Periodensystems, wie z. B. Eisen- oder Stahlpulver, zugesetzt werden, oder nicht.

Als Komponente C) können die erfindungsgemäßen Polyamid-Zusammensetzungen Nigrosin enthalten, vorzugsweise in einer Menge von 0,05 bis 1 Gew.-%, besonders bevorzugt 0,1 bis 0,5 Gew.-%, insbesondere 0,2 bis 0,4 Gew.-%, bezogen auf Komponente A).

Nigrosin (Solvent Black 7 - CAS: 8005-02-5) ist ein tiefschwarzer organischer Farbstoff.

Nigrosin ist eine Mischung aus synthetischen schwarzen Farbmitteln und wird durch Erhitzen von Nitrobenzol, Anilin und Anilinhydrochlorid in der Gegenwart eines Eisen- oder Kupfer-Katalysators gewonnen. Nigrosine treten in verschiedenen Ausführungen auf (wasserlöslich, alkohollöslich und öllöslich). Ein typisches wasserlösliches Nigrosin ist Acid Black 2 (C.I. 50420), ein typisches alkohollösliches Nigrosin ist Solvent Black 5 (C.I. 50415), und ein typisches öllösliches Nigrosin ist Solvent Black 7 (C.I. 50415:1).

Nigrosin ist jedoch im Hinblick auf eine möglicherweise gesundheitsschädliche Wirkung nicht unbedenklich. So können z. B. herstellungsbedingt Reste von Anilin und Nitrobenzol im Produkt verbleiben, und es besteht die Gefahr der Entstehung von unerwünschten Zersetzungsprodukten bei der nachfolgenden Verarbeitung mittels Extrusionsverfahren oder Spritzgussverfahren oder Spinnverfahren.

Der Zusatz von Nigrosin in den erfindungsgemäßen Polyamid-Zusammensetzungen kann die Kristallisationsneigung der Polyamid-Zusammensetzung nochmals vermindern, da Nigrosin die Kristallisation stört. Der Zusatz führt somit zu einer langsameren Kristallisation bzw. zur Absenkung der Kristallisationstemperatur.

Es kann zudem vorteilhaft sein, Solvent Black 28 (CAS Nr. 12237-23-91) einzusetzen und gegebenenfalls mit wenigstens einem weiteren Farbmittel zu kombinieren. Die Komponente C) ist dann vorzugsweise ausgewählt unter von Nigrosin verschiedenen nicht nukleierenden Farbmitteln. Dazu zählen nicht nukleierende Farbstoffe, nicht nukleierende Pigmente und Mischungen davon. Beispiele für nicht nukleierende Farbstoffe sind Solvent Yellow 21 (im Handel als Oracet^{®} Yellow 160 FA von der Firma BASF SE erhältlich) oder Solvent Blue 104 (im Handel als Solvaperm^{®} Blue 2B von der Firma Clariant erhältlich). Beispiele für nicht nukleierende Pigmente sind Pigment Brown 24 (im Handel als Sicotan^{®} Yellow K 2011 FG von der Firma BASF SE erhältlich). Auch kommen als Komponente B) geringe Mengen wenigstens eines Weißpigments in Frage. Geeignete Weißpigmente sind Titandioxid (Pigment White 6), Bariumsulfat (Pigment White 22), Zinksulfid (Pigment White 7) etc. In einer speziellen Ausführung enthält die erfindungsgemäße Formmasse als Komponente E) 0,001 bis 0,5 Gew.-% wenigstens eines Weißpigments. Beispielsweise kann die Formmasse 0,05 Gew.-% Titandioxid der Marke Kronos 2220 der Firma Kronos enthalten.

Die Art und Menge der Zugabe richtet sich nach dem Farbton, d. h. der gewünschten Nuance des Schwarztones. Zum Beispiel kann mit Solvent Yellow 21 der Farbton des Schwarztones im CIELAB-Farbenraum von beispielsweise b* = -1,0 in Richtung +b*, also in Richtung Gelb verschoben werden. Dem Fachmann ist diese Methode als Farbnuancierung bekannt. Die Messung erfolgt nach DIN 6174 "Farbmetrische Bestimmung von Farbmaßzahlen und Farbabständen im angenähert gleichförmigen CIELAB-Farbenraum" bzw. der Nachfolgenorm.

Als Komponente C) kann auch Ruß mitverwendet werden. Beispielsweise enthalten die erfindungsgemäßen Zusammensetzungen 0,05 bis 3 Gew.-%, bevorzugt 0,07 bis 1 Gew.-%, vorzugsweise 0,1 bis 0,2 Gew.-% Ruß. Ruß (Carbon Black), auch als Industrieruß bezeichnet, ist eine Modifikation des Kohlenstoffs mit hohem Oberfläche-zu-Volumen-Verhältnis und besteht zu 80 bis 99,5 Gew.-% aus Kohlenstoff. Die spezifische Oberfläche von Industrieruß beträgt etwa 10 bis 1500 m²/g (BET). Der Ruß kann als Gasruß, Furnaceruß, Flammruß, Spaltruß oder Acetylenruß hergestellt sein. Der Korndurchmesser liegt im Bereich von 8 bis 500 nm, typischerweise 8 bis 110 nm. Ruß wird auch als Pigment Black 7 oder Lamp Black 6 bezeichnet. Farbruße sind nanoteilige Ruße, die durch ihre Feinheit zunehmend den braunen Grundton üblicher Ruße verlieren.

In den erfindungsgemäßen Formmassen sind vorzugsweise sind keine weiteren von den Polyamiden der Komponente A) unterschiedlichen thermoplastischen Polyamide enthalten.

Die nachfolgende, nicht abschließende Aufstellung enthält die genannten Polyamide der Komponente A und die enthaltenen Monomeren.

### AB-Polymere:

| | |
|---|---|
| PA 6 | ε-Caprolactam |

### AA/BB-Polymere:

| | |
|---|---|
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |

### AA/BB-Polymere:

| | |
|---|---|
| PA 6/66 | (siehe PA 6 und PA 66) |
| PA 6/12 | (siehe PA 6 und PA 12) |
| PA 66/6/610 | (siehe PA 66, PA 6 und PA 610) |

Zusätzlich zu Komponente A) können weitere Polymere mitverwendet werden. Dies ist aber weniger bevorzugt.

Die von Komponente A) verschiedenen thermoplastischen Polymere sind vorzugsweise ausgewählt unter
- Homo- oder Copolymeren, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten, wie beispielsweise Styrol, Acrylnitril, Methacrylnitril, α,β-ethylenisch ungesättigten Mono- und Dicarbonsäuren, und Maleinsäureanhydrid,
- Homo- und Copolymeren von Vinylacetalen,
- Polyvinylestern,
- Polycarbonaten (PC),
- Polyestern, wie Polyalkylenterephthalaten, Polyhydroxyalkanoaten (PHA), Polybutylensuccinaten (PBS), Polybutylensuccinatadipaten (PBSA),
- Polyethern,
- Polyetherketonen,
- thermoplastischen Polyurethanen (TPU),
- Polysulfiden,
- Polysulfonen,
- Polyethersulfonen,
- Cellulosealkylestern
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, AcrylnitrilButadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder Cellulose-Acetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Neben den Glasfasern (Komponente B)) können weitere Füll- und Verstärkungsstoffe eingesetzt werden.

Der Begriff "Füllstoff und Verstärkungsstoff" (= mögliche Komponente C)) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), nanoskalige Schichtsilikate, nanoskaliges Aluminiumoxid (Al₂O₃), nanoskaliges Titandioxid (TiO₂), Graphen, dauerhaft magnetische bzw. magnetisierbare Metallverbindungen und/oder Legierungen, Schichtsilikate und nanoskaliges Siliciumdioxid (SiO₂), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können - weniger bevorzugt - ein oder mehrere zusätzliche Faserstoffe zum Einsatz kommen. Diese sind vorzugsweise ausgewählt aus bekannten anorganischen Verstärkungsfasern, wie Borfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Die Komponente C) kann 0,1 bis 1 Gew.-%, vorzugsweise 0,1 bis 0,5 Gew.-% an Schmiermitteln enthalten.

Die erfindungsgemäßen Formmassen können 0 bis 25 Gew.-%, besonders bevorzugt 0 bis 15 Gew.-%, bezogen auf das Gewicht der Komponente A), mindestens eines Flammschutzmittels als Additiv B) enthalten. Wenn die erfindungsgemäßen Formmassen mindestens ein Flammschutzmittel enthalten, so vorzugsweise in einer Menge von 0,01 bis 25 Gew.-%, besonders bevorzugt von 0,1 bis 15 Gew.-%, bezogen auf das Gewicht der Komponente A). Als Flammschutzmittel kommen halogenhaltige und halogenfreie Flammschutzmittel und deren Synergisten in Frage (siehe auch Gächter/Müller, 3. Ausgabe, 1989, Hanser Verlag, Kapitel 11). Bevorzugte halogenfreie Flammschutzmittel sind roter Phosphor, Phosphinsäure- oder Diphosphinsäuresalze, und/oder stickstoffhaltige Flammschutzmittel wie Melamin, Melamincyanurat, Melaminsulfat, Melaminborat, Melaminoxalat, Melaminphosphat (prim., sec.) oder sec. Melaminpyrophosphat, Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP-A-1 095 030), Ammoniumpolyphosphat, Trishydroxyethylisocyanurat (gegebenenfalls auch Ammoniumpolyphosphat in Mischung mit Trishydroxyethylisocyanurat) (EP-A-058 456 7). Weitere N-haltige oder P-haltige Flammschutzmittel oder als Flammschutzmittel geeignete PN-Kondensate können der DE-A-10 2004 049 342 entnommen werden, ebenso die hierfür üblichen Synergisten wie Oxide oder Borate. Geeignete halogenhaltige Flammschutzmittel sind z. B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bisphenol-A mit Epoxiden, bromierte oligomere oder polymere Styrole, Dechloran, welche meist mit Antimonoxiden als Synergisten eingesetzt werden (für Einzelheiten und weitere Flammschutzmittel: siehe DE-A-10 2004 050 025).

Als Komponente C) kann auch zusätzlich zu Ruß und Nigrosin mindestens ein zusätzliches Farbmittel, ausgewählt aus Anthrachinon-Farbmitteln, Benzimidazolon-Farbmitteln und Perinon-Farbmitteln, eingesetzt werden. Dabei handelt es sich vorzugsweise bei den Farbmitteln um Farbstoffe, Pigmente oder deren Gemische.

Das Farbmittel wird erfindungsgemäß in einer Menge von 10 bis 1000 ppm, vorzugsweise 20 bis 500 ppm, insbesondere 50 bis 200 ppm eingesetzt, bezogen auf die gesamte Formmasse.

Als Komponente C) werden bevorzugt Nigrosin, Ruß, Schmiermittel, Wärme- und gegebenenfalls UV-Stabilisatoren eingesetzt. Flammschutzadditive werden nicht eingesetzt. Die Mitverwendung von mineralischen Füllstoffen ist möglich, aber nicht bevorzugt. Ebenso ist die Mitverwendung weiterer Polymere neben der Komponente A) weniger bevorzugt.

Die Herstellung der Polyamid-Formmassen erfolgt nach an sich bekannten Verfahren. Dazu zählt das Mischen der Komponenten in den entsprechenden Gewichtsanteilen.

Es ist auch möglich, Rezyklate der einzelnen Komponenten oder auch von Gemischen einzusetzen.

Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 °C bis 340 °C, besonders bevorzugt von 240 bis 320 °C und speziell von 250 bis 300 °C. Dem Fachmann sind die geeigneten Verfahren bekannt.

### Formkörper

Des Weiteren betrifft die vorliegende Erfindung Formkörper, die unter Verwendung der erfindungsgemäßen Polyamid-Formmassen hergestellt werden.

Die Polyamid-Formmassen können zur Herstellung von Formteilen mittels beliebiger geeigneter Verarbeitungstechniken verwendet werden. Geeignete Verarbeitungstechniken sind insbesondere Spritzgießen, Extrusion, Coextrusion, Tiefziehen oder jede andere bekannte Kunststoff-Formgebungsmethode. Diese und weitere Beispiele sind z. B. in "Einfärben von Kunststoffen", VDI-Verlag, ISBN 3-18-404014-3, zu finden.

Die Polyamid-Formmassen eignen sich weiter vorteilhaft für eine Verwendung für Automobil-Anwendungen, zur Herstellung von Formteilen für Elektro- und Elektronikbauteile, speziell auch im Hochtemperaturbereich.

Eine spezielle Ausführungsform sind Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenbereich für A-, B-, C- oder D-Säulenabdeckungen, Spoiler, Türgriffe, Außenspiegelkomponenten, Scheibenwischerkomponenten, Scheibenwischerschutzgehäuse, Ziergitter, Deckleisten, Dachreling, Fensterrahmen, Schiebedachrahmen, Antennenverkleidungen, Vor- und Rückleuchten, Motorabdeckungen, Zylinderkopfhauben, Ansaugrohre, Scheibenwischer sowie Karosserieaußenteile möglich.

Eine weitere spezielle Ausführungsform sind Formkörper als solche oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Die erfindungsgemäßen Polyamid-Formmassen eignen sich weiterhin speziell zur Herstellung von Steckverbindern, Mikroschaltern, Mikrotastern und Halbleiterbauteilen, insbesondere Reflektorgehäusen von Leuchtdioden (LED).

Eine spezielle Ausführungsform sind Formkörper als Befestigungselemente elektrischer oder elektronischer Bauteile, wie Abstandshalter, Bolzen, Leisten, Einschubführungen, Schrauben und Muttern.

Insbesondere bevorzugt ist ein Formteil in Form oder als Teil eines Sockels, eines Steckverbinders, eines Steckers oder einer Buchse. Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen.

Für den Küchen- und Haushaltsbereich ist der Einsatz der erfindungsgemäßen Polyamide zur Herstellung von Türgriffen oder Komponenten für Küchengeräte, wie z. B. von Fritteusen, Bügeleisen, sowie Anwendungen im Gartenbereich, z. B. Komponenten für Bewässerungssysteme oder Gartengeräte, möglich.

Die erfindungsgemäßen thermoplastischen Formmassen eignen sich ferner als Klebeschicht oder Haftschicht für Metalle. Sie können so zur Beschichtung von Metallblechen eingesetzt werden. Hierzu kann ferner auf WO 2005/014278 verwiesen werden.

Die Herstellung der Polyamid-Formmasse zur Herstellung von Formteilen erfolgt nach an sich bekannten Verfahren. Auf die oben genannten Verfahren zur Herstellung der Polyamid-Zusammensetzung wird hier Bezug genommen. Dazu zählt das Mischen der Komponenten in den entsprechenden Gewichtsanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 bis 340 °C, besonders bevorzugt von 240 bis 320 °C und speziell von 250 bis 300 °C. Es kann vorteilhaft sein, einzelne Komponenten vorzumischen. Es ist weiterhin auch möglich, die Formteile aus einer deutlich unterhalb der Schmelztemperatur des Polyamids hergestellten physikalischen Mischung (Dryblend) vorgemischter Komponenten und/oder einzelner Komponenten direkt herzustellen. Die Temperatur beim Mischen beträgt dann vorzugsweise 0 bis 100 °C, besonders bevorzugt 10 bis 50 °C, insbesondere Umgebungstemperatur (25 °C). Die Formmassen können nach üblichen Verfahren, beispielsweise durch Spritzguss oder Extrusion, zu Formteilen verarbeitet werden. Sie eignen sich insbesondere beispielweise für Materialen für Deckel, Gehäuse, Anbauteile, Sensoren, beispielsweise für Kfz-, Elektro-, Elektronik-, Telekommunikations-, Informationstechnologie-, Computer-, Haushalts-, Sport-, Medizin- oder Unterhaltungsanwendungen.

Die Erfindung wird durch die nachfolgenden Beispiele näher erläutert. Alle Beispiele betreffen schwarz eingefärbte Compounds, die exemplarisch für alle weiteren möglichen Farben stehen. Schwarz ist der kritischste Farbton, vor allem hinsichtlich Hydrolysebeständigkeit, da Oberflächenveränderungen bei schwarzen Formkörpern am deutlichsten erkennbar sind.

### Beispiele

### Materialien:

| | |
|---|---|
| PA 6: | Polyamid 6 mit einer Viskositätszahl VZ von 195 ml/g, gemessen als 0,5 gew.-%ige Lösung in 96 gew.-%iger Schwefelsäure bei 25 °C nach ISO 307 (verwendet wurde Ultramid^{®} B33 der BASF SE) |
| PA 6.10: | Polyamid 6.10 mit einer Viskositätszahl VZ von 150 ml/g, gemessen als 0,5 gew.-%ige Lösung in 96 gew.-%iger Schwefelsäure bei 25 °C nach ISO 307 (verwendet wurde Zytel^{®} RS LC3060 NC010 von DuPont de Nemours (Deutschland) GmbH) |
| Ruß: | Black Pearls^{®} 880 von Cabot |
| Schmiermittel: | EBS (Ethylen-bis-Stearamid der Lonza Cologne GmbH) |
| Nigrosin: | Nigrosin (Hersteller: COLLOIDS LTD.) 40%ig in Polyamid 6 (Nigrosinbatch) |
| Wärmestabilisator: | Naugard^{®} 445 der Addivant Sales Germany GmbH |
| Glasfasern: | ECR-Glas (Schnittglasfaser DS 1110 mit einem mittleren Durchmesser von 10 µm der 3B-FIBREGLASS S.P.R.L.) |
| Natriumhypophosphit: | Monohydrat der Innochem GmbH |
| Glysantin^{®} G48^{®}: | Monoethylenglykol, Kühlerschutzmittel der BASF SE |

Charakterisierungsmethoden:
Schlagzähigkeit gemäß ISO 179-2/1eU (2019 gültige Fassung)
Kerbschlagzähigkeit gemäß ISO 179-2/1eAf (2019 gültige Fassung)
Zug-E-Modul gemäß ISO 527 (2019 gültige Fassung)
Bruchspannung gemäß ISO 527 (2019 gültige Fassung)
Bruchdehnung gemäß ISO 527 (2019 gültige Fassung)
Herstellung der Compounds:
Vergleich 1, Beispiele 1 bis 2

Die in den vergleichenden sowie den ausführungsgemäßen Beispielen beschriebenen Kunststoff-Formmassen wurden hergestellt durch Schmelzemischen der einzelnen Komponenten in einem Zweiwellenextruder ZSK 26 MC der Firma Coperion bei einem Durchsatz von 25 kg/h und 260 °C Gehäusetemperatur. Die Schmelze wurde über eine 4 mm-Düse als Strang ausgetragen, in einem Wasserbad bis zur Granulierfähigkeit abgekühlt und granuliert.

### Herstellung der Prüfkörper:

Prüfkörper für die Untersuchung der Schlagzähigkeit, Kerbschlagzähigkeit wurden nach ISO 179-2/1 und für Zugversuche nach ISO 527 auf einer Spritzgießmaschine des Typs Arburg 420C angefertigt.

### Hydrolyselagerung:

Die Prüfkörper für Schlagzähigkeit, Kerbschlagzähigkeit und für Zugversuche wurden in einem Autoklav unter Luftabschluss in einem Gemisch aus Wasser und Glysantin^{®} G48^{®} mit dem Mischungsverhältnis 50:50 bei 120 °C unter konstantem Rühren gelagert. Die jeweiligen Probenkörper wurden nach den angegebenen Lagerzeiten dem Autoklav entnommen und direkt im Anschluss ohne Rücktrocknung gemäß der ISO-Normen geprüft.

Die Ergebnisse sind in den Tabellen 1 bis 3 zusammengestellt.

**Tabelle 1**

| Zusammensetzung | Vergleich 1 | Beispiel 1 | Beispiel 2 |
|---|---|---|---|
| PA 6 | 63,56 | 57,26 | 50,96 |
| PA 6.10 | 0 | 6,3 | 12,6 |
| Glasfaser | 35 | 35 | 35 |
| Natriumhypophosphit | 0,04 | 0,04 | 0,04 |
| Wärmestabilisator | 0,6 | 0,6 | 0,6 |
| Nigrosinbatch | 0,5 | 0,5 | 0,5 |
| Ruß | 0,1 | 0,1 | 0,1 |
| Schmiermittel | 0,2 | 0,2 | 0,2 |

**Tabelle 2**

| Mechanische Eigenschaften (trocken) | | | | | |
|---|---|---|---|---|---|
| | Einheit | ISO | Vergleich 1 | Beispiel 1 | Beispiel 2 |
| Zug-E-Modul | MPa | 527 | 10804 | 10627 | 10688 |
| Bruchspannung | MPa | 527 | 176 | 168 | 169 |
| Bruchdehnung | % | 527 | 4,0 | 4,2 | 4,0 |
| Charpy Schlagzähigkeit | kJ/m² | 179-2/1eU | 102 | 101 | 103 |
| Charpy Kerbschlagzähigkeit | kJ/m² | 179-2/1eAf | 15,0 | 14,7 | 15,2 |

**Tabelle 3**

| Lagerung in Monoethylenglykol/Wasser (1:1) bei 120 °C | | | | | |
|---|---|---|---|---|---|
| Zug-E-Modul | | | | | |
| Zeit [h] | Einheit | ISO | Vergleich 1 | Beispiel 1 | Beispiel 2 |
| 48 | MPa | 527 | 3848 (100%) | 3665 (100%) | 3819 (100%) |
| 1000 | MPa | 527 | 4245 (110%) | 4132 (113%) | 4322 (113%) |
| 2000 | MPa | 527 | 3991 (103%) | 3764 (103%) | 4138 (108%) |
| 3000 | MPa | 527 | 3745 (97%) | 3553 (97%) | 3902 (102%) |

| Bruchspannung | | | | | |
|---|---|---|---|---|---|
| 48 | MPa | 527 | 93 (100%) | 89 (100%) | 91 (100%) |
| 1000 | MPa | 527 | 74 (80%) | 78 (87%) | 79 (86%) |
| 2000 | MPa | 527 | 38 (41%) | 41 (46%) | 50 (55%) |
| 3000 | MPa | 527 | 17 (18%) | 23 (26%) | 31 (34%) |

| Bruchdehnung | | | | | |
|---|---|---|---|---|---|
| 48 | % | 527 | 8,7 (100%) | 9,0 (100%) | 8,7 (100%) |
| 1000 | % | 527 | 4,4 (51 %) | 4,9 (54%) | 4,7 (54%) |
| 2000 | % | 527 | 1,3 (15%) | 1,5 (17%) | 2,0 (23%) |
| 3000 | % | 527 | 0,6 (7%) | 0,8 (9%) | 1,1 (13%) |

## Patentansprüche

1. Thermoplastische Formmasse, enthaltend
a) eine Mischung aus 100 Gewichtsteilen Polyamid-6 oder Polyamid-6/6.6 und 7 bis 50 Gewichtsteilen aliphatischem Polyamid aus C₄₋₁₀-Diamin und C₈₋₁₆-Dicarbonsäure als Komponente A),
b) 10 bis 70 Gew.-%, bezogen auf Komponente A), an Glasfasern als Komponente B),
c) 0 bis 30 Gew.-%, bezogen auf Komponente A), weiterer Zusatzstoffe als Komponente C),
wobei die Formmasse keine von Polyamiden der Komponente A) unterschiedlichen thermoplastischen Polyamide und keine Flammschutzadditive enthält.

2. Thermoplastische Formmasse nach Anspruch 1 mit einer Abnahme der Bruchspannung gemäß ISO 527 nach Lagerung für 3000 h bei 120 °C in Monoethylenglykol/WasserGemisch im Gewichtsverhältnis 1:1 um maximal 78 %.

3. Thermoplastische Formmasse nach Anspruch 1 oder 2, **dadurch gekennzeichnet, dass** Komponente C) 0,05 bis 3 Gew.-%, bezogen auf Komponente A), Ruß enthält.

4. Thermoplastische Formmasse nach einem der Ansprüche 1 bis 3, **dadurch gekennzeichnet, dass** Komponente C) 0,05 bis 1 Gew.-%, bezogen auf Komponente A), an Schmiermitteln enthält.

5. Thermoplastische Formmasse nach einem der Ansprüche 1 bis 4, **dadurch gekennzeichnet, dass** das aliphatische Polyamid aus C₄₋₁₀-Diamin und C₈₋₁₆-Dicarbonsäure Polyamid-6.10, Polyamid-6.12 oder ein Gemisch davon, vorzugsweise Polyamid-6.10, ist.

6. Thermoplastische Formmasse nach einem der Ansprüche 1 bis 5, **dadurch gekennzeichnet, dass** Komponente C) 0,1 bis 5 Gew.-%, bezogen auf Komponente A), mindestens eines Wärmestabilisators enthält.

7. Thermoplastische Formmasse nach einem der Ansprüche 1 bis 6, **dadurch gekennzeichnet, dass** Komponente C) 0,05 bis 1 Gew.-%, bezogen auf Komponente A), an Nigrosin enthält.

8. Verfahren zur Herstellung von Formmassen nach einem der Ansprüche 1 bis 7, **dadurch gekennzeichnet, dass** man die Komponenten A) und B) und gegebenenfalls C) miteinander vermischt.

9. Verwendung der Formmassen nach einem der Ansprüche 1 bis 7 zur Herstellung von Fasern, Folien oder Formkörpern.

10. Fasern, Folien oder Formkörper aus einer Formmasse nach einem der Ansprüche 1 bis 7.

11. Verwendung von Mischungen aus 100 Gewichtsteilen Polyamid-6 oder Polyamid-6/6.6 und 5 bis 100 Gewichtsteilen aliphatischem Polyamid aus C₄₋₁₀-Diamin und C₈₋₁₆-Dicarbonsäure in Formmassen zur Herstellung von Formkörpern zur Erhöhung der Hydrolysebeständigkeit der Formkörper gegenüber Wasser oder wässrigen Flüssigkeiten, wie Kühlmittelmischungen.

12. Verwendung von Mischungen aus 100 Gewichtsteilen Polyamid-6 oder Polyamid-6/6.6 und 5 bis 100 Gewichtsteilen aliphatischem Polyamid aus C₄₋₁₀-Diamin und C₈₋₁₆-Dicarbonsäure in Formmassen zur Erhöhung der Hydrolysebeständigkeit der Formmassen gegenüber Wasser oder wässrigen Flüssigkeiten, wie Kühlmittelmischungen.

13. Verwendung von Mischungen aus 100 Gewichtsteilen Polyamid-6 oder Polyamid-6/6.6 und 5 bis 100 Gewichtsteilen aliphatischem Polyamid aus C₄₋₁₀-Diamin und C₈₋₁₆-Dicarbonsäure zur Erhöhung der Bruchspannung von diese enthaltenden Formkörpern, die in Kontakt mit Monoethylenglykol sind.

## Claims

1. A thermoplastic molding material comprising
a) a mixture of 100 parts by weight of polyamide 6 or polyamide 6/6,6 and 7 to 50 parts by weight of aliphatic polyamide composed of C₄₋₁₀-diamine and C₈₋₁₆-dicarboxylic acid as component A),
b) 10 to 70% by weight, based on component A), of glass fibers as component B),
c) 0 to 30% by weight, based on component A), of further additives as component C),
wherein the molding material comprises no thermoplastic polyamides distinct from polyamides of the component A) and no flame retardant additives.

2. The thermoplastic molding material according to claim 1 with a reduction in breaking stress according to ISO 527 after storage for 3000 h at 120°C in a monoethylene glycol/water mixture in a 1:1 weight ratio of not more than 78%.

3. The thermoplastic molding material according to claim 1 or 2, wherein component C) comprises 0.05% to 3% by weight, based on component A), of carbon black.

4. The thermoplastic molding material according to any of claims 1 to 3, wherein component C) comprises 0.05% to 1% by weight, based on component A), of lubricants.

5. The thermoplastic molding material according to any of claims 1 to 4, wherein the aliphatic polyamide composed of C₄₋₁₀-diamine and C₈₋₁₆-dicarboxylic acid is polyamide-6,10, polyamide-6,12 or a mixture thereof, preferably polyamide-6,10.

6. The thermoplastic molding material according to any of claims 1 to 5, wherein component C) comprises 0.1% to 5% by weight, based on component A), of at least one heat stabilizer.

7. The thermoplastic molding material according to any of claims 1 to 6, wherein component C) comprises 0.05% to 1% by weight, based on component A), of nigrosin.

8. A process for producing molding materials according to any of claims 1 to 7, wherein the components A) and B) and optionally C) are mixed with one another.

9. The use of the molding materials according to any of claims 1 to 7 for producing fibers, films or shaped articles.

10. A fiber, film or shaped article made of a molding material according to any of claims 1 to 7.

11. The use of mixtures of 100 parts by weight of polyamide 6 or polyamide 6/6,6 and 5 to 100 parts by weight of aliphatic polyamide composed of C₄₋₁₀-diamine and C₈₋₁₆-dicarboxylic acid in molding materials for producing shaped articles for increasing the hydrolysis resistance of the shaped articles towards water or aqueous liquids, such as coolant mixtures.

12. The use of mixtures of 100 parts by weight of polyamide 6 or polyamide 6/6,6 and 5 to 100 parts by weight of aliphatic polyamide composed of C₄₋₁₀-diamine and C₈₋₁₆-dicarboxylic acid in molding materials for increasing the hydrolysis resistance of the molding materials towards water or aqueous liquids, such as coolant mixtures.

13. The use of mixtures of 100 parts by weight of polyamide 6 or polyamide 6/6,6 and 5 to 100 parts by weight of aliphatic polyamide composed of C₄₋₁₀-diamine and C₈₋₁₆-dicarboxylic acid for increasing the breaking stress of shaped articles comprising such mixtures which are in contact with monoethylene glycol.

## Revendications

1. Masse à mouler thermoplastique, contenant
a) un mélange de 100 parties en poids de polyamide 6 ou de polyamide 6/6.6 et de 7 à 50 parties en poids d'un polyamide aliphatique provenant d'une diamine en C₄₋₁₀ et d'un acide dicarboxylique en C₈₋₁₆ en tant que composant A),
b) 10 à 70 % en poids, par rapport au composant A), de fibres de verre en tant que composant B),
c) 0 à 30 % en poids, par rapport au composant A), d'additifs supplémentaires en tant que composant C),
la masse à mouler ne contenant aucun polyamide thermoplastique différent des polyamides du composant A) et aucun additif ignifugeant.

2. Masse à mouler thermoplastique selon la revendication 1 dotée d'une réduction d'au maximum 78 % de la tension de rupture selon la norme ISO 527 après stockage pendant 3 000 h à 120 °C dans un mélange de monoéthylèneglycol/eau en un rapport en poids de 1 : 1.

3. Masse à mouler thermoplastique selon la revendication 1 ou 2, **caractérisée en ce que** le composant C) contient 0,05 à 3 % en poids, par rapport au composant A), de suie.

4. Masse à mouler thermoplastique selon l'une quelconque des revendications 1 à 3, **caractérisée en ce que** le composant C) contient 0,05 à 1 % en poids, par rapport au composant A), de lubrifiant.

5. Masse à mouler thermoplastique selon l'une quelconque des revendications 1 à 4, **caractérisée en ce que** le polyamide aliphatique provenant d'une diamine en C₄₋₁₀ et d'un acide dicarboxylique en C₈₋₁₆ est un polyamide 6.10, un polyamide 6.12 ou un mélange de ceux-ci, de préférence un polyamide 6.10.

6. Masse à mouler thermoplastique selon l'une quelconque des revendications 1 à 5, **caractérisée en ce que** le composant C) contient 0,1 à 5 % en poids, par rapport au composant A), d'au moins un stabilisant thermique.

7. Masse à mouler thermoplastique selon l'une quelconque des revendications 1 à 6, **caractérisée en ce que** le composant C) contient 0,05 à 1 % en poids, par rapport au composant A), de nigrosine.

8. Procédé de préparation de masses à mouler selon l'une quelconque des revendications 1 à 7, **caractérisé en ce qu'**on mélange les uns avec les autres les composants A) et B) et éventuellement C) .

9. Utilisation de masses à mouler selon l'une quelconque des revendications 1 à 7 pour la préparation de fibres, de feuilles ou de corps moulés.

10. Fibres, feuilles ou corps moulés composé(e)s d'une masse moulée selon l'une quelconque des revendications 1 à 7.

11. Utilisation de mélanges de 100 parties en poids de polyamide 6 ou de polyamide 6/6.6 et de 5 à 100 parties en poids d'un polyamide aliphatique provenant d'une diamine en C₄₋₁₀ et d'un acide dicarboxylique en C₈₋₁₆ dans des masses à mouler pour la préparation de corps moulés pour l'augmentation de la stabilité à l'hydrolyse des corps moulés vis-à-vis de l'eau ou de liquides aqueux, comme des mélanges d'agents réfrigérants.

12. Utilisation de mélanges de 100 parties en poids de polyamide 6 ou de polyamide 6/6.6 et de 5 à 100 parties en poids d'un polyamide aliphatique provenant d'une diamine en C₄₋₁₀ et d'un acide dicarboxylique en C₈₋₁₆ dans des masses à mouler pour l'augmentation de la stabilité à l'hydrolyse des masses à mouler vis-à-vis de l'eau ou de liquides aqueux, comme des mélanges d'agents réfrigérants.

13. Utilisation de mélanges de 100 parties en poids de polyamide 6 ou de polyamide 6/6.6 et de 5 à 100 parties en poids d'un polyamide aliphatique provenant d'une diamine en C₄₋₁₀ et d'un acide dicarboxylique en C₈₋₁₆ pour l'augmentation de la tension de rupture de corps moulés contenant ceux-ci, qui sont en contact avec du monoéthylèneglycol.
